# EUROPEAN PATENT APPLICATION

(11) **EP 4 579 926 A1**
(43) Date of publication of application: **02.07.2025**
(21) Application number: 24840071.5
(22) Date of filing: 09.07.2024
(51) Int. Cl.: H01M 50/516, B23K 26/21, H01M 50/503, H01M 50/531

(54) **ELECTRODE LEAD WELDING METHOD**

(30) Priority: 10.07.2023 KR 20230088782
(71) Applicant: LG Energy Solution, Ltd., Seoul 07335 (KR)
(72) Inventor: JEON, Jong Pil, Daejeon 34122 (KR); LEE, Jung Woo, Daejeon 34122 (KR); LEE, Jae Chul, Daejeon 34122 (KR)
(74) Representative: Hoffmann Eitle
(86) International application number: PCT/KR2024/009801
(87) International publication number: WO 2025/014261

(57) **Abstract**

Disclosed herein relates to an electrode lead welding method for welding electrode leads of a cell assembly including a plurality of cells, including: preparing a cell stack with a plurality of stacked cells from which electrode leads are drawn out; preparing a busbar frame provided with a lead connection part including a pair of lead 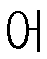 slits spaced apart at a predetermined distance; coupling a cell stack and a busbar frame such that electrode leads of the cell stack are inserted through the lead slits; bending the electrode leads penetrating through the lead slits of the lead connection part so that the electrode leads overlap towards each other; and welding the pair of overlapped electrode leads, wherein the lead connection part comprises an insertion groove between a pair of lead slits, wherein the method further comprises inserting a welding protection bar into the insertion groove prior to the welding step, wherein the welding protection bar is inserted into the insertion groove to be spaced apart at a predetermined distance from the rear surface of the electrode lead.

## Description

### [Technical Field]

The present invention relates to an electrode lead welding method for welding electrode leads of a cell assembly including a plurality of cells, characterized in that, in welding the electrode leads to electrically connect the electrode leads, it provides a method for welding electrode leads using a weld protection bar to prevent a busbar frame from being damaged by the welding.

This application claims the benefit of priority from Korean Patent Application No. 10-2023-0088782, filed on July 10, 2023, the disclosure of which is incorporated herein by reference in its entirety.

### [Background Technology of the Invention]

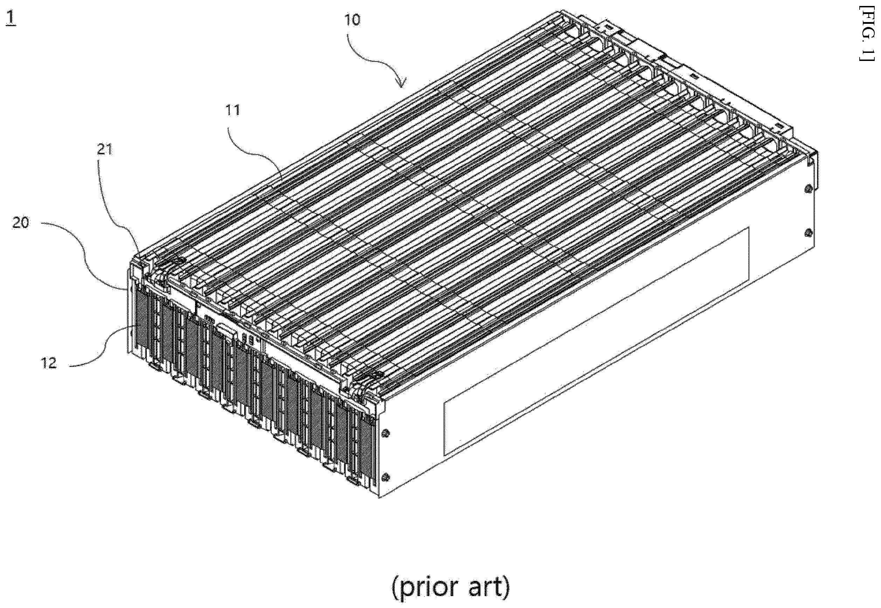

FIG. 1 illustrates a cell assembly 1 including a cell stack 10 stacked with a plurality of cells 11 each having an electrode lead 12 drawn out from both sides.

The cell assembly 1 includes a cell stack 10 and a busbar frame 20 coupled to at least one side of the cell stack 10.

In the case of a conventional cell assembly 1, a busbar 21 is applied for electrical connection of the stacked cells 11 to each other, and a plurality of electrode leads 12 drawn from each of the plurality of cells 11 are positioned on the busbar 21 and welding is performed.

In this case, the plurality of busbars 21 is positioned on the busbar frame 20 at a predetermined distance apart, and the welding is performed by a welding unit provided to be freely movable on the busbar frame 20.

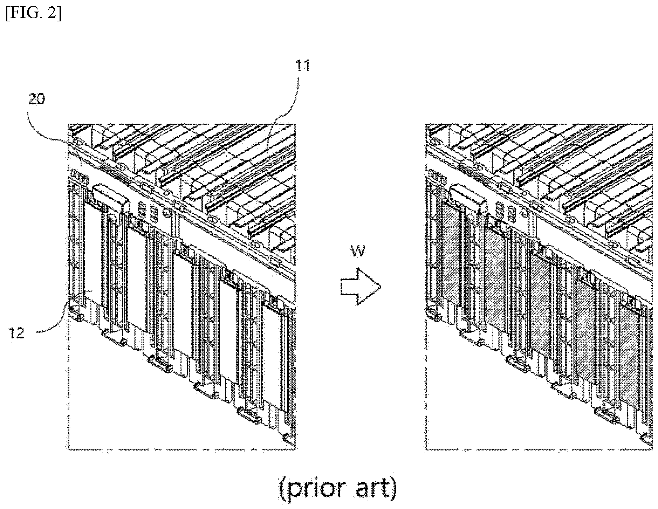

The welding may be directed toward the surface of the electrode leads 12 that are drawn and bent toward the front surface of the busbar frame 20 as shown in FIG. 2.

The welding completes the electrical connection between the electrode leads 12 and the busbar 21.

However, there may be a problem with the heat generated to perform the welding being transferred to the busbar frame 20.

Since conventional busbar frames 20 are often made of plastic materials, the high temperature heat generated by the welding can have a devastating effect.
[Patent Document] Korean Published Patent No. 10-2015-0038930

### [Description of the Invention]

### [Technical Problem]

Accordingly, the present invention was invented to solve the above problems, and aims to provide a welding method that can prevent damage to a busbar frame when welding electrode leads.

The present invention also aims to provide a welding method capable of preventing contact damage to the electrode leads by a welding protection bar provided to prevent the busbar frame from being damaged during the welding process.

Other objects and advantages of the present invention will be understood from the following description, and will become more apparent from the embodiments of the present invention. It will also be readily apparent that the objects and advantages of the present invention may be realized by the means and combinations thereof disclosed in the patent claims.

### [Technical Solution]

According to the present invention, the present invention provides an electrode lead welding method including: preparing a cell stack with a plurality of stacked cells from which electrode leads are drawn out; preparing a busbar frame provided with a lead connection part including a pair of lead slits spaced apart at a predetermined distance; coupling a cell stack and a busbar frame such that electrode leads of the cell stack are inserted through the lead slits; bending the electrode leads penetrating through the lead slits of the lead connection part so that the electrode leads overlap towards each other; and welding the pair of overlapped electrode leads, wherein the lead connection part comprises an insertion groove between a pair of lead slits, wherein the method further comprises inserting a welding protection bar into the insertion groove prior to the welding step, wherein the welding protection bar is inserted into the insertion groove to be spaced apart at a predetermined distance from the rear surface of the electrode lead.

The welding may be performed by laser welding.

The insertion groove may be formed extending along a longitudinal direction of the lead slit.

The busbar frame may include a plurality of lead connection parts.

The busbar frame comprises a busbar mounted in the insertion groove to contact the bent electrode leads, wherein the busbar and electrode leads may be coupled together by welding in a welding step.

The busbar frame includes a busbar inserting part supporting a rear surface of the busbar, wherein the busbar inserting part may be positioned at the end of the insertion groove relative to the short width direction of the busbar frame, and may be positioned on an upper part of the insertion groove relative to a thickness direction of the busbar frame.

The lead slit may be penetrated by at least one electrode lead.

A pair of lead slits included in the lead connection part may be each penetrated by an electrode lead of a different polarity.

The temperature of the heat generated by the welding is 2000°C or more, wherein
the welding protection bar may include a heat resistant material capable of withstanding heat generated from the welding.

The welding protection bar is provided in plurality at an end of the protection bar frame and is configured to move back and forth toward the busbar frame, wherein
each of the welding protection bars may be spaced apart at a predetermined distance at an end of the protection bar frame.

Each of the welding protection bars may be positioned at an end of the protection bar frame and corresponds to a spacing of the insertion grooves in the busbar frame.

A thickness length of the welding protection bar may be less than a depth of the insertion groove.

The welding protection bar may be inserted into an insertion groove in a step of preparing a busbar frame.

The welding protection bar may be inserted into an insertion groove in a step of bending the electrode lead.

A plate-shaped welding filler that melts by the welding may be interposed between the overlapped pair of electrode leads and an insertion groove in a busbar frame.

### [Advantageous Effects]

According to the present invention, electrode leads and busbars, etc. can be welded without damaging the components.

Furthermore, according to the present invention, the electrode leads can be prevented from contact damage by a welding protection bar used to prevent the busbar frame from being damaged during welding.

### [Brief Description of the Drawings]

FIG. 1 is a perspective view of a conventional cell assembly.
FIG. 2 is an enlarged view of a portion of the cell assembly of FIG. 1.
FIG. 3 is a flowchart of an electrode lead welding method according to a first embodiment of the present invention.
FIG. 4 illustrates each step according to the flowchart in FIG. 3, using a cell stack and busbar frame.
FIG. 5 is a perspective view of a busbar frame of the present invention.
FIG. 6 is a horizontal section of the busbar frame of FIG. 5.
FIG. 7 is a plan view of FIG. 6.
FIG. 8 shows the application of a welding protection bar to the busbar frame of FIG. 7.
FIG. 9 is a front view of the busbar frame of FIG. 8.
FIG. 10 is an enlarged view of a portion of FIG. 8.
FIG. 11 illustrates a welding protection bar coupled to a protection bar frame.
FIG. 12 illustrates a portion of a busbar frame with bent electrode leads.
FIG. 13 is a cutaway cross-sectional view of a portion of the busbar frame of FIG. 12.
FIG. 14 illustrates a partial cross-section of a busbar frame with a welding filler applied.
FIG. 15 simply illustrates the process of removing the welding protection bar after welding.
FIG. 16 is a flowchart of an electrode lead welding method according to a second embodiment of the present invention.
FIG. 17 illustrates a portion of each of the steps according to the flowchart of FIG. 16, using a cell stack and busbar frame.

### [Best Mode for Carrying out the Invention]

Hereinafter, preferred embodiments of the present invention will be described in detail with reference to the accompanying drawings. Prior to this, it should be noted that the terms or words used in this specification and the claims are not to be construed in their ordinary or dictionary sense, but rather in a sense and concept consistent with the technical idea of the invention, based on the principle that the inventor may properly define the concept of a term to best describe his/her invention.

Accordingly, it is to be understood that the embodiments described herein and the configurations illustrated in the drawings are only the most preferred embodiments of the invention and are not intended to be exhaustive of the technical ideas of the invention, and that there may be various equivalents and modifications that may be substituted for them at the time of filing.

Furthermore, in describing the invention, specific descriptions of related known configurations or features are omitted where it is determined that such detailed descriptions would obscure the essence of the invention.

Because the embodiments of the present invention are provided to more fully explain the invention to those of ordinary skill in the art, the shapes and sizes of components in the drawings may be exaggerated, omitted, or shown schematically for clarity. Accordingly, the size or proportion of each component is not necessarily indicative of its actual size or proportion.

The present invention relates to an electrode lead welding method for welding electrode leads of a cell assembly including a plurality of cells, characterized in that, in welding the electrode leads to electrically connect them, the present invention provides a method for welding the electrode leads using a welding protection bar to prevent the busbar frame from being damaged by the welding.

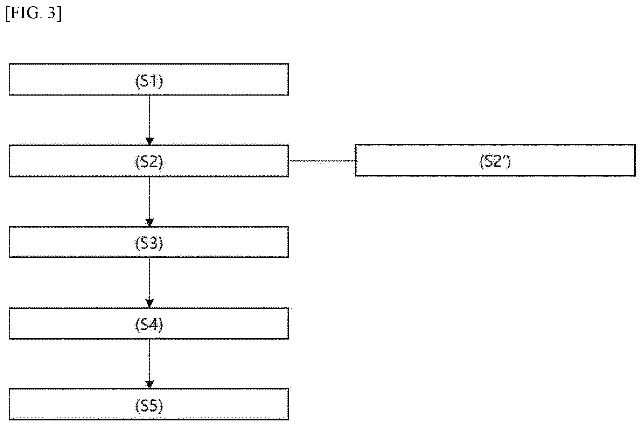

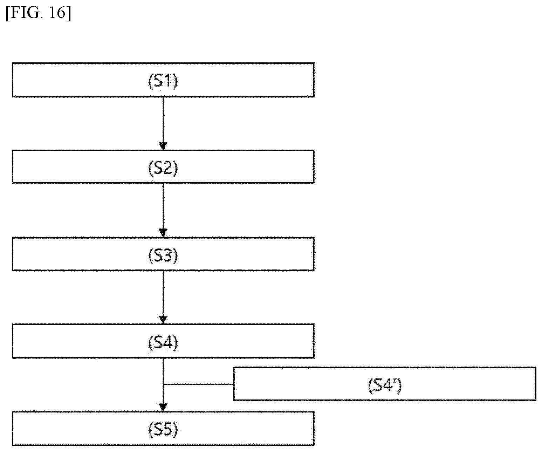

FIGS. 3 through 15 relate to an electrode lead welding method according to a first embodiment of the present invention, and FIGS. 16 through 17 relate to an electrode lead welding method according to a second embodiment of the present invention.

Hereinafter, the electrode lead welding method of the present invention will be described with reference to the respective drawings.

### (First embodiment)

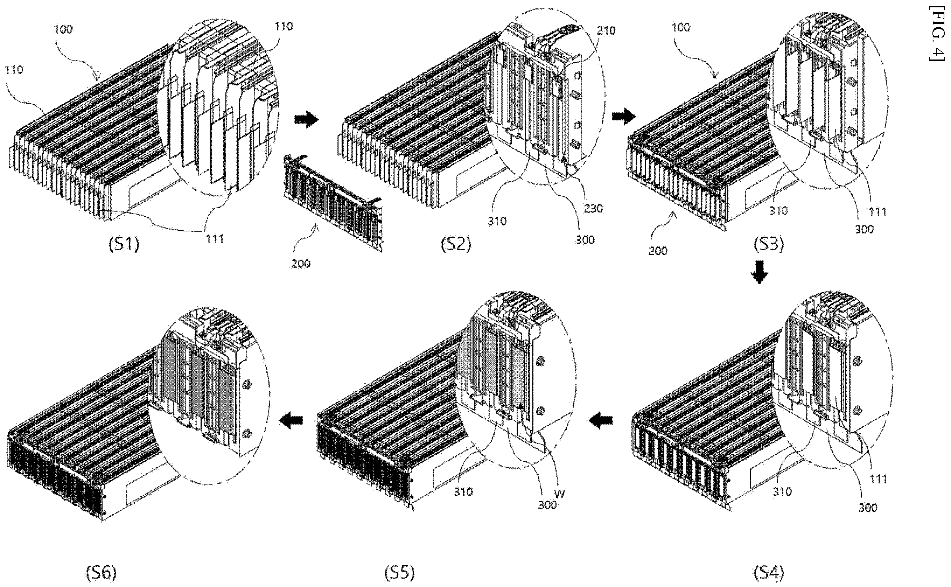

FIG. 3 is a flowchart of an electrode lead 111 welding method according to a first embodiment of the present invention. FIG. 4 illustrates each step according to the flowchart of FIG. 3 using a cell stack 100 and a busbar frame 200.

The electrode lead 111 welding method according to a first embodiment of the present invention fundamentally includes a cell stack 100 preparation step S1, a busbar frame 200 preparation step S2, a coupling step S3, a bending step S4, and a welding step S5, as shown in FIG. 3, with the addition of an inserting step S2' in the basic configuration.

Below, each step is described with reference to FIGS. 3 and 4.

### Cell Stack 100 Preparation Step S1

This is a step of preparing a cell stack 100 having a plurality of cells 110 stacked with electrode leads 111 drawn out therefrom.

The cell 110 includes an electrode assembly formed by stacking electrodes and a separator or the like, an electrode lead 111 in electrical communication with the electrode assembly, a case enclosing and sealing the electrode assembly so that the electrode lead 111 is drawn out outwardly, and an electrolyte filled with the electrode assembly inside the case.

The cell 110 of the present invention includes a pair of electrode leads 111 having different polarities.

The cell stack 100 includes a plurality of cells 110 stacked in one direction such that electrode leads 111 can be disposed side-by-side at a predetermined distance.

### Busbar Frame 200 Preparation Step S2

This is a step of preparing a busbar frame 200 having a lead connection part 200p including a pair of lead slits 230 spaced apart at a predetermined distance.

The busbar frame 200 is provided with a busbar 210 that can be electrically connected with the electrode leads 111 of the cell stack 100.

The busbar frame 200 is coupled to the cell stack 100 to fix the cell stack 100, and at the same time supports the rear surface of the electrode leads 111 such that electrode leads 111 drawn out from the cell stack 100 can be fixed to the busbar 210

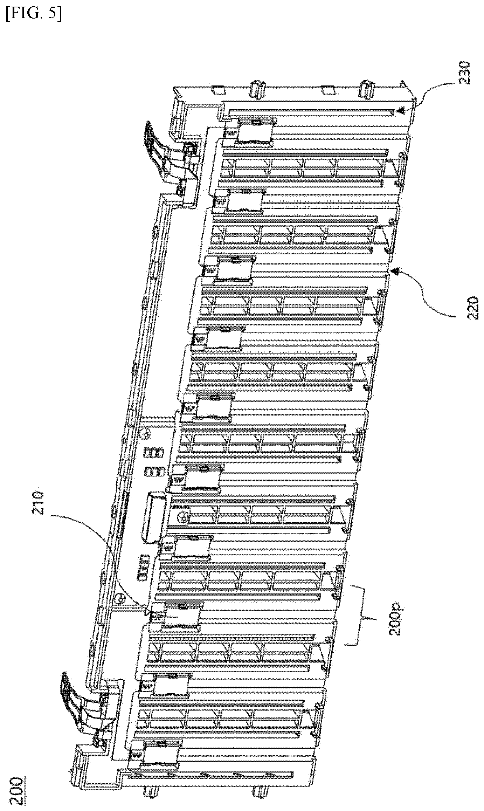

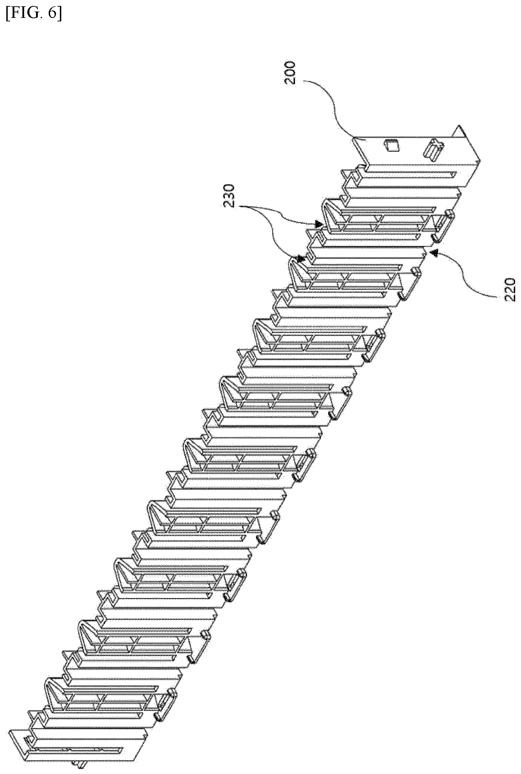

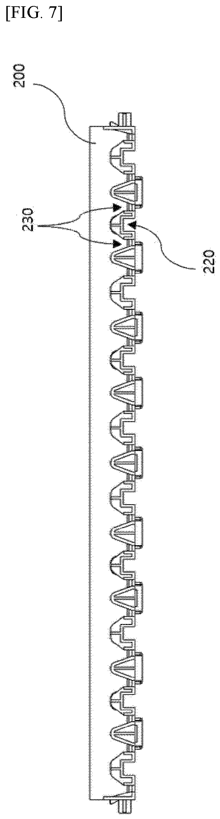

FIG. 5 is a perspective view of the busbar frame 200 of the present invention, FIG. 6 is a horizontal sectional view of the busbar frame 200 of FIG. 5, and FIG. 7 is a plan view of FIG. 6.

The lead connection part 200p comprises a pair of lead slits 230 and an insertion groove 220 formed between the lead slits 230.

The busbar frame 200 may have a plurality of lead connection parts 200p formed to match the number of electrode leads 111 of the cell stack 100 to which it is coupled.

The lead slit 230 is opened to allow the electrode lead 111 to pass through.

The lead slits 230 are formed in a shape through which the electrode leads 111 of the cell stack 100 coupled to the busbar frame 200 can pass.

The lead slit 230 of the present invention is formed extending along a short width direction of the busbar frame 200.

The insertion groove 220 is formed in a shape that is recessed at a certain depth in the thickness direction of the busbar frame 200.

The insertion groove 220 allows the busbar frame 200 to avoid direct contact with the heat generated by welding, and may also serve as a migration path for the gases, by-products, and the like generated by welding. In particular, in the present invention, the insertion groove 220 becomes a zone into which a welding protection bar 310 is inserted, which is used to protect the surface of the busbar frame 200 from the heat of welding.

The insertion groove 220 is formed extending along the longitudinal direction of the lead slit 230.

The busbar 210 is mounted in the insertion groove 220 so as to be in electrical contact with electrode leads 111 passing through the lead slit 230. That is, one lead connection part 200p may include one busbar 210.

The busbar frame 200 further includes a busbar 210 inserting part formed in a shape recessed in the thickness direction of the busbar frame 200 into which the busbar 210 may be inserted.

The busbar 210 inserting part may be formed at an end of the insertion groove 220. That is, the busbar 210 inserting part is located at an end of the inserting part 220 relative to a short width direction of the busbar frame 200.

The busbar 210 inserting part may also be formed to overlap the insertion groove 220. That is, the busbar 210 inserting part may be located on upper part of the insertion groove 220 relative to the thickness direction of the busbar frame 200.

The busbar 210 is inserted into the busbar 210 inserting part so that its rear surface is supported.

### Inserting Step S2'

This is a step of inserting the welding protection bar 310 into the insertion groove 220 of the busbar frame 200.

The welding protection bar 310 of the present invention may be inserted into the insertion groove 220 during the step of preparing the busbar frame 200. Thus, the step S2 of preparing the busbar frame 200 of the present invention may include an inserting step S2'.

The welding protection bar 310 is used to prevent the busbar frame 200 from being directly damaged by the high temperature heat generated by welding. That is, the welding protection bar 310 is installed on the surface of the area to be protected from welding.

Preferably, the welding protection bar 310 includes a heat-resistant material capable of withstanding the heat generated by the welding. For example, the welding protection bar may include carbon steel.

The method of welding the electrode leads 111 according to a first embodiment of the present invention includes, in a step of preparing the busbar frame 200, coupling a welding protection bar 310 to the busbar frame 200.

The welding protection bar 310 is inserted into the insertion groove 220 in such a way as to be removable in various forms.

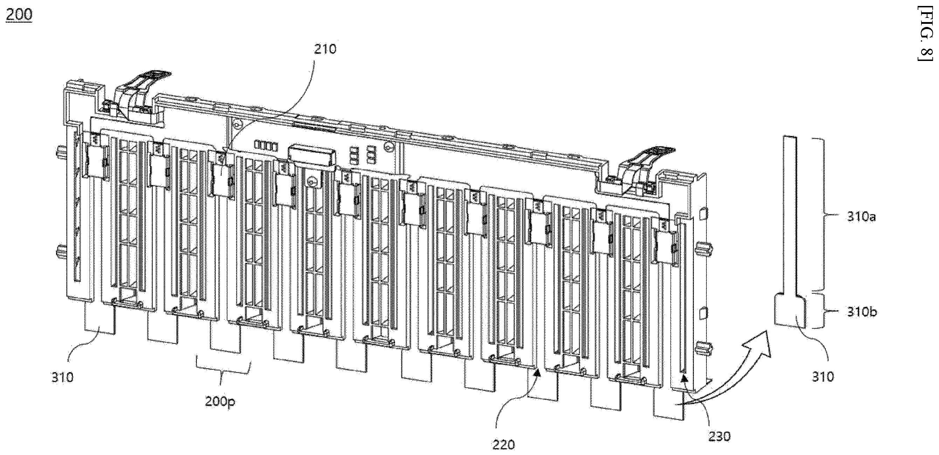

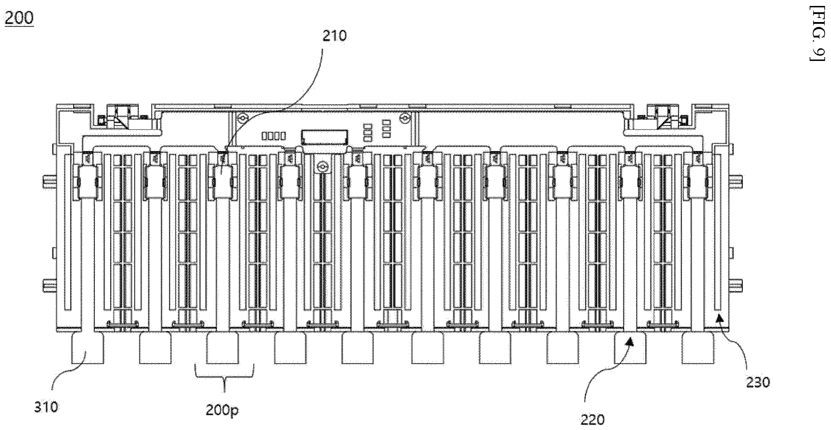

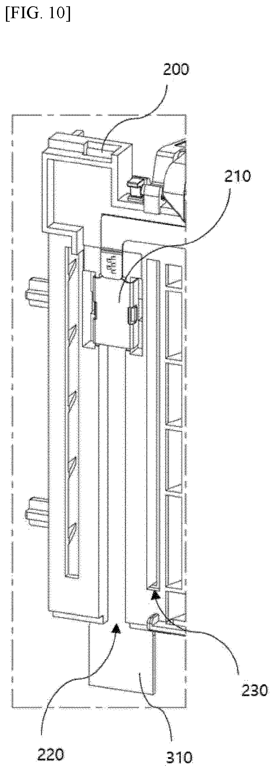

FIG. 8 is an illustration of the application of the welding protection bar 310 to the busbar frame 200 of FIG. 5, FIG. 9 is a front view of the busbar frame 200 of FIG. 8, and FIG. 10 is an enlarged view of a portion of FIG. 8.

The welding protection bar 310 includes a bar-shaped protection part 310a formed to be extended and inserted into the insertion groove 220, and a protruding part 310b having a width longer than the width of the protection part 310a at an end of the protection part 310a to be caught at the entrance of the insertion groove 220.

The welding protection bar 310 is coupled to the busbar frame 200 such that the protection part 310a is slidably inserted into an inserting part of the busbar frame 200, and the protruding part 310b is engaged in a protruding shape from an end of the busbar frame 200.

The welding protection bar 310 is inserted against the bottom part of the insertion groove 220.

The plurality of welding protection bars 310 may be inserted into the required insertion grooves 220 independently, as shown in FIGS. 8 and 9, or may be coupled to one protection bar frame 300 and inserted into each insertion groove 220 simultaneously.

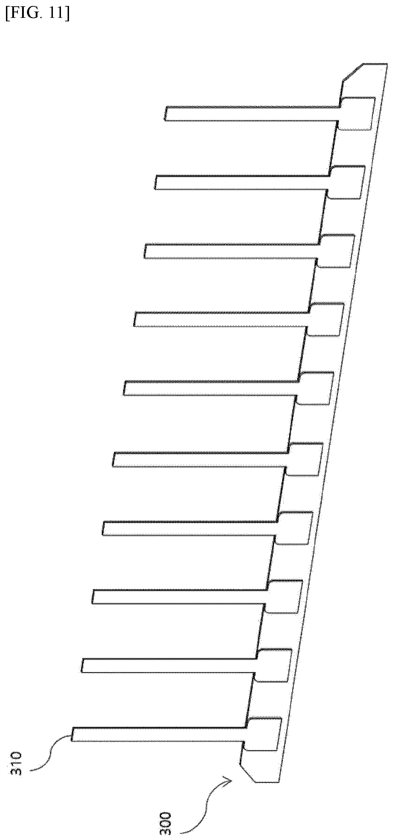

FIG. 11 illustrates a welding protection bar 310 coupled to a protection bar frame 300.

The welding protection bar 310 is provided in plurality at an end of the protection bar frame 300 and is configured to move back and forth toward the busbar frame 200. Specifically, a protruding part 310b of the welding protection bar 310 is coupled to the end of the protection bar frame 300.

A plurality of welding protection bars 310 coupled to the protection bar frame 300 is disposed on one side of the protection bar frame 300, all facing in one direction.

Each of the welding protection bars 310 is spaced apart at a predetermined distance at the ends of the protection bar frame 300, as shown in FIG. 11.

Each of the welding protection bars 310 is positioned at an end of the protection bar frame 300 and corresponds to the spacing of the insertion grooves 220 of the busbar frame 200. That is, the position of each welding protection bar 310 coupled to the protection bar frame 300 is influenced by the spacing of the insertion grooves 220.

Preferably, the length of the thickness of the welding protection bar 310 used in the electrode lead 111 welding method of the present invention is shorter than the depth of the insertion groove 220. Here, if the length of the thickness of the welding protection bar 310 is the same as the depth of the insertion groove 220 or is longer than the depth of the insertion groove 220, there may be a problem of contacting the electrode lead 111 when the welding protection bar 310 is moved by sliding in the insertion groove 220.

### Coupling Step S3

This is a step of coupling the cell stack 100 and the busbar frame 200 such that the electrode leads 111 of the cell stack 100 are inserted through the lead slits 230.

A plurality of electrode leads 111 drawn to one side of the cell stack 100 is inserted through a plurality of lead slits 230 formed in the busbar frame 200.

The at least one lead slit 230 is penetrated by the at least one electrode lead 111.

A pair of lead slits 230 included in the lead connection part 200p is each penetrated by an electrode lead 111 of a different polarity.

### Bending Step S4

This is a step of bending the electrode leads 111 that has penetrated through the lead slits 230 of the lead connection part 200p so that the electrode leads 111 overlap toward each other.

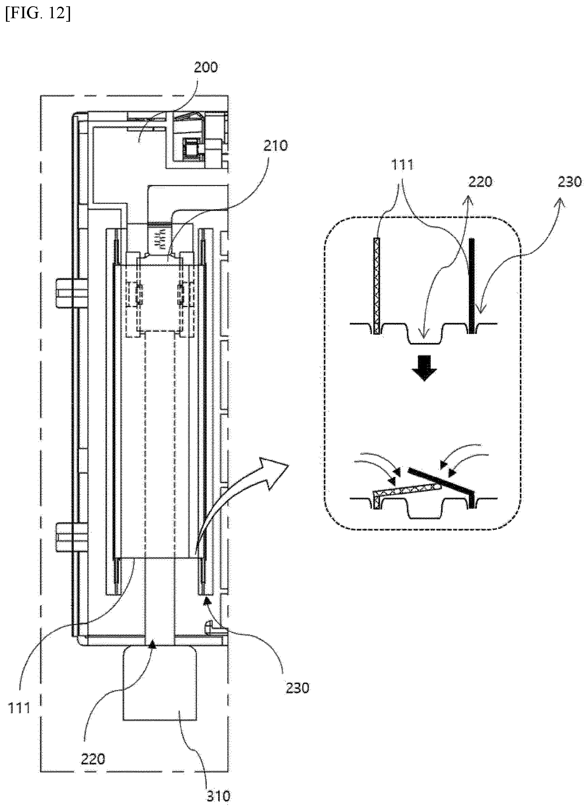

FIG. 12 illustrates a portion of a busbar frame 200 in which electrode leads 111 are bent.

The electrode leads 111 that has perpendicularly penetrated the lead slits 230 are bent at nearly right angles and overlap each other to be supported on the front surface of the busbar frame 200.

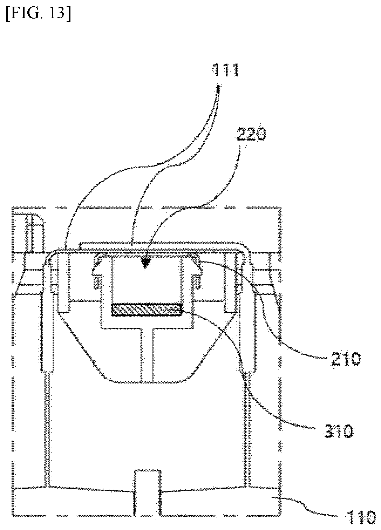

FIG. 13 is a cutaway cross-sectional view of a portion of the busbar frame 200 of FIG. 12.

The electrode lead 111 welding method of the present invention is characterized in that the welding protection bars 310 are spaced apart from the rear surface of the electrode lead 111 at a predetermined distance and do not touch each other, as shown in FIG. 13. In other words, the rear surface of the bent electrode lead 111 is preferably supported only by the busbar frame 200. In this case, the rear surface of the bent electrode leads 111 is connected by contacting the front surface of the busbar 210 as shown in FIG. 13.

Between the overlapped pair of electrode leads 111 and the insertion groove 220 of the busbar frame 200 may be interposed a welding filler 400 that melts by welding.

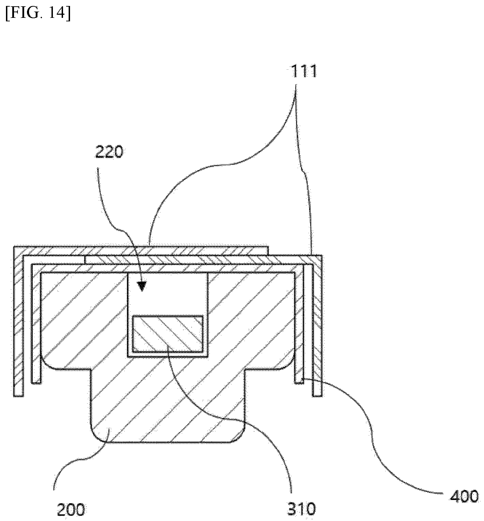

FIG. 14 illustrates a partial cross-section of a busbar frame 200 with a welding filler 400 applied.

The welding filler 400 may be plate-shaped, and may be bent at both ends toward the busbar frame 200 as shown in FIG. 14.

Both ends of the bent welding filler 400 may each be inserted into the lead slit 230 of the lead connection part 200P.

### Welding Step S5

This is a step of welding the overlapped pair of electrode leads 111.

The welding may be performed by laser welding.

The temperature of the heat generated in the welded area by the welding is 2000°C or higher.

The electrode leads 111 may be bonded together by the welding, or the electrode leads 111 and the busbar 210 may be bonded together by the welding.

### Removing Step S6

The electrode lead 111 welding method of the present invention may further include the step of removing the welding protection bar 310 inserted in the insertion groove 220.

Since the welding protection bar 310 serves no additional purpose other than to protect the busbar frame 200 from welding, it is desirable to remove it to reduce the weight of the cell 110 assembly.

Thus, the inserted welding protection bar 310, or the welding protection bar 310 and the protection bar frame 300, is retracted from the busbar frame 200 and removed.

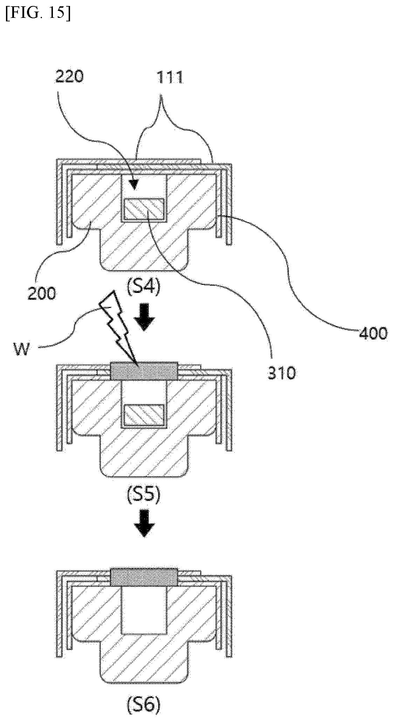

FIG. 15 is a simplified representation of the process of removing the welding protection bar 310 after welding.

The welding protection bar 310 is coupled in close contact with the bottom of the insertion groove 220 to protect the bottom part of the insertion groove 220 from the heat of welding. In this case, the welding protection bar 310 is not bonded to the electrode lead 111, the welding filler 400, and the like by welding.

Referring to FIG. 15, after the welding is completed, the welding protection bar 310 is disengaged from the insertion groove 220 and removed.

### (Second embodiment)

The step of inserting the welding protection bar 310 may be included in the step of preparing the busbar frame 200, or may be included in any step between the step of preparing the busbar frame 200 and the welding step.

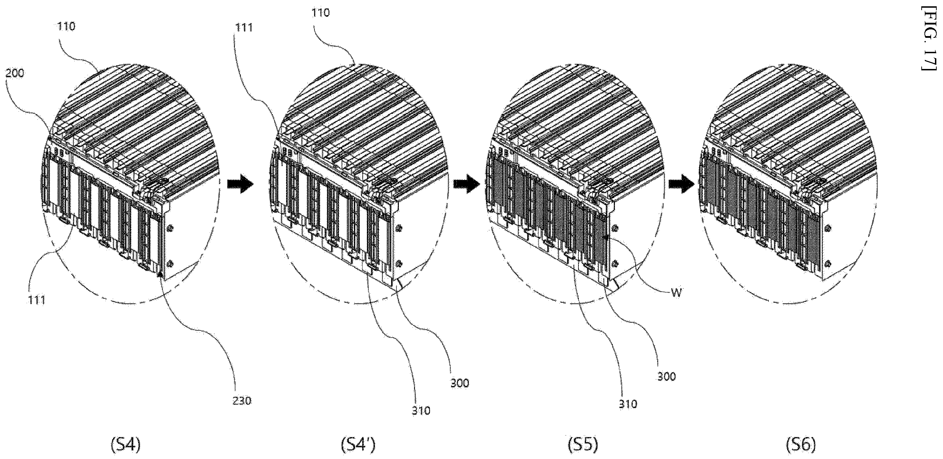

FIG. 16 is a flowchart of an electrode lead 111 welding method according to the second embodiment of the present invention. FIG. 17 illustrates some of the steps in the flowchart of FIG. 16 using a cell stack 100 and a busbar frame 200.

The electrode lead 111 welding method according to the second embodiment of the present invention fundamentally includes a cell stack 100 preparation step S1, a busbar frame 200 preparation step S2, a coupling step S3, a bending step S4, and a welding step S5, with the addition of an inserting step S4' in the basic configuration.

The electrode lead 111 welding method according to the second embodiment of the invention differs from the electrode lead 111 welding method according to the first embodiment in that the welding protection bar 310 is not prepared by inserting it into the insertion groove 220 in the preparation step of the busbar frame 200. That is, the welding protection bar 310 is inserted in the step immediately preceding each welding step.

Referring to FIG. 16, the welding protection bar 310 is inserted into the insertion groove 220 in the step of bending the electrode lead 111.

However, the thickness length of the welding protection bar 310 is shorter than the depth of the insertion groove 220, so that the bent electrode lead 111 does not come into contact with the welding protection bar 310 during the process of slidingly inserting the welding protection bar 310 into the insertion groove 220.

The electrode lead 111 welding method according to the second embodiment of the invention may further include, as in the first embodiment, a step wherein the welding protection bar 310 inserted in the insertion groove 220 is removed.

Since the welding protection bar 310 serves no additional purpose other than to protect the busbar frame 200 from welding, it is desirable to remove it to reduce the weight of the cell 110 assembly.

Thus, the inserted welding protection bar 310, or the welding protection bar 310 and the protection bar frame 300, is retracted from the busbar frame 200 and removed.

The welding protection bar 310 is coupled in close contact with the bottom of the insertion groove 220 to protect the bottom part of the insertion groove 220 from the heat of welding. In this case, the welding protection bar 310 is not bonded to the electrode lead 111 and the welding filler 400 by welding.

After the welding is completed, the welding protection bar 310 is disengaged from the insertion groove 220 and removed.

The present invention has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may be substituted for them at the time of filing the present application.

### [Reference numerals]

1: (PRIOR ART) CELL ASSEMBLY
10: (PRIOR ART) CELL STACK
11: (PRIOR ART) CELL
12: (PRIOR ART) ELECTRODE LEAD
20: (PRIOR ART) BUSBAR FRAME
21: (PRIOR ART) BUSBAR
100: CELL STACK
110: CELL
111: ELECTRODE LEAD
200: BUSBAR FRAME
200p: LEAD CONNECTION PART
210: BUSBAR
220: INSERTION GROOVE
230: LEAD SLIT
300: PROTECTION BAR FRAME
310: WELDING PROTECTION BAR
310a: PROTECTION PART
310b: PROTRUDING PART
400: WELDING FILLER
S1: CELL STACK PREPARATION STEP
S2: BUSBAR FRAME PREPARATION STEP
S3: COUPLING STEP
S4: BENDING STEP
S2', S4': INSERTING STEP
S5: WELDING STEP
S6: REMOVING STEP
W: WELDING

## Claims

1. An electrode lead welding method for welding electrode leads of a cell assembly comprising a plurality of cells, comprising:
preparing a cell stack with a plurality of stacked cells from which electrode leads are drawn out;
preparing a busbar frame provided with a lead connection part including a pair of lead slits spaced apart at a predetermined distance;
coupling the cell stack and the busbar frame such that electrode leads of the cell stack are inserted through the lead slits;
bending the electrode leads penetrating through the lead slits of the lead connection part so that the electrode leads overlap towards each other; and
welding the pair of overlapped electrode leads, wherein
the lead connection part comprises an insertion groove between a pair of lead slits, wherein
the method further comprises inserting a welding protection bar into the insertion groove prior to the welding step, wherein
the welding protection bar is inserted into the insertion groove to be spaced apart at a predetermined distance from a rear surface of the electrode lead.

2. The electrode lead welding method of claim 1, wherein
the welding is performed by laser welding.

3. The electrode lead welding method of claim 1, wherein
the insertion groove is formed extending along a longitudinal direction of the lead slit.

4. The electrode lead welding method of claim 1, wherein
the busbar frame comprises a plurality of lead connection parts.

5. The electrode lead welding method of claim 1, wherein
the busbar frame comprises a busbar mounted in the insertion groove to contact the bent electrode leads, wherein
the busbar and electrode leads are coupled together by welding in a welding step.

6. The electrode lead welding method of claim 5, wherein
the busbar frame comprises a busbar inserting part supporting a rear surface of the busbar, wherein
the busbar inserting part is
positioned at an end of the insertion groove relative to a short width direction of the busbar frame, and
positioned on an upper part of the insertion groove relative to a thickness direction of the busbar frame.

7. The electrode lead welding method of claim 1, wherein
the lead slit is penetrated by at least one electrode lead.

8. The electrode lead welding method of claim 1, wherein
a pair of lead slits included in the lead connection part is each penetrated by an electrode lead of a different polarity.

9. The electrode lead welding method of claim 1, wherein
the temperature of the heat generated by the welding is 2000°C or more, wherein
the welding protection bar comprises a heat resistant material capable of withstanding heat generated from the welding.

10. The electrode lead welding method of claim 1, wherein
the welding protection bar is provided in plurality at an end of a protection bar frame and is configured to move back and forth toward the busbar frame, wherein
each of the welding protection bars is spaced apart at a predetermined distance at an end of the protection bar frame.

11. The electrode lead welding method of claim 10, wherein
each of the welding protection bars is positioned at an end of the protection bar frame and corresponds to a spacing of the insertion grooves in the busbar frame.

12. The electrode lead welding method of claim 1, wherein
a thickness length of the welding protection bar is less than a depth of the insertion groove.

13. The electrode lead welding method of claim 1, wherein
the welding protection bar is inserted into the insertion groove in a step of preparing a busbar frame.

14. The electrode lead welding method of claim 1, wherein
the welding protection bar is inserted into the insertion groove in a step of bending the electrode lead.

15. The electrode lead welding method of claim 1, wherein
a plate-shaped welding filler that melts by the welding is interposed between the overlapped pair of electrode leads and an insertion groove in the busbar frame.
